# EUROPEAN PATENT SPECIFICATION

(11) **EP 4 047 736 B1**
(45) Date of publication and mention of the grant of the patent: **10.04.2024**
(21) Application number: 22156651.6
(22) Date of filing: 14.02.2022
(51) Int. Cl.: H01M 50/552, H01M 50/553, H01M 50/557, H01M 50/567

(54) **BATTERY MODULE**
BATTERIEMODUL
MODULE DE BATTERIE

(30) Priority: 16.02.2021 KR 20210020302
(43) Date of publication of application: 24.08.2022
(73) Proprietor: SK On Co., Ltd., Seoul 03188 (KR)
(72) Inventor: PARK, Byung Jun, 34124 Daejeon (KR); KIM, Suk Chul, 34124 Daejeon (KR); KIM, Yong Uk, 34124 Daejeon (KR); KIM, Yun Hee, 34124 Daejeon (KR); BAEK, Moo Han, 34124 Daejeon (KR); SEOK, Jong Ho, 34124 Daejeon (KR); CHANG, Tae Hyun, 34124 Daejeon (KR); HAN, Dong Hwa, 34124 Daejeon (KR)
(74) Representative: Stolmár & Partner Patentanwälte PartG mbB

(56) References cited:
- EP-A1- 3 582 283
- US-A1- 2012 052 350
- US-A1- 2019 027 717
- US-A1- 2019 363 319

## Description

### BACKGROUND

### 1. FIELD

The present disclosure relates to a battery module, and more particularly, to a terminal electrically connected to a battery cell in a battery module and exposed externally of the battery module.

### 2. DESCRIPTION OF RELATED ART

In a battery module including a plurality of battery cells, temperature may rise continuously due to an abnormality such as a short circuit or the like occurring in some battery cells, and when the temperature of the battery cells exceeds a critical temperature, a thermal runaway phenomenon may occur. Due to the occurrence of thermal runaway in some battery cells, a safety issue may arise. Exemplary battery modules comprising a plurality of battery cells and a housing are disclosed in US 2012/052350 A1 and US 2019/363319 A1. An exemplary secondary battery containing a top cover assembly is disclosed in US 2019/027717 A1.

An occurrence of a flame or the like due to a thermal runaway phenomenon occurring in some battery cells may rapidly increase a temperature of adjacent battery cells, and the thermal runaway phenomenon may propagate to the adjacent cells within a short period of time. As a result, a failure to rapidly handle the thermal runaway phenomenon that occurs in some battery cells may lead to disasters such as fire or explosion of a battery module or a battery pack, which is a battery unit with a larger capacity than a battery cell, which may cause a safety issue as well as property damage.

A battery module may include a battery cell, and the battery cell may be connected to a neighboring battery module or an external circuit through a conducting member such as a bus bar. When a thermal runaway phenomenon occurs, pressure and temperature inside the battery module may increase, which may disengage the conducting member from the battery module. This may further accelerate the combustion of the battery cell or cause the fire to propagate to neighboring battery modules. For example, the battery cell is sealed by a housing to suppress thermal runaway in a manner of asphyxiation extinguishing that minimizes oxygen supply even if a fire occurs. However, if the conducting member is separated from the battery module, a large amount of oxygen may flow into the internal battery cell from the outside of the battery module to accelerate thermal runaway. Therefore, there is a need for a means for maintaining a sealed structure of the battery cell by preventing the conducting member from being separated from the battery module even in a thermal runaway situation.

### SUMMARY

The battery module of the invention is given in the claims.

Exemplary embodiments provide a unit for stably maintaining a sealed structure of a battery module even in a thermal runaway situation. Specifically, an aspect of the present disclosure is to prevent a conducting member, which is connected to a battery cell and exposed to the outside of a battery module, from being separated from a housing of the battery module even in an event situation such as thermal runaway.

According to an aspect of the present disclosure, a battery module includes: a housing; a first battery cell and a second battery cell accommodated inside the housing; and a terminal assembly electrically connecting the first battery cell and the second battery cell and partially embedded in the housing to be fixed to the housing.

The terminal assembly includes a first conductive member that includes: a bridge embedded in the housing; and connection portions extending from both sides of the bridge and respectively connected to the first battery cell and the second battery cell.

The first conductive member may include a flange extending in a direction, intersecting a direction in which the connection portions extend.

The flange may extend in a direction away from each of the connection portions.

The connection portions may include at least one through-hole in a portion embedded in the housing, and an inside of the through-hole may be filled with a material constituting the housing.

The housing may include a vent hole connecting an internal side and an external side of the housing, and the first conductive member may include a through-hole in a portion corresponding to the vent hole.

The through-hole may be provided to be larger than the vent hole.

The battery module may further include a second conductive member electrically connected to the first conductive member and partially exposed to the external side of the housing.

The battery module may further include a rod extending from the first conductive member to the external side of the housing, wherein the second conductive member may be fitted into the rod.

The battery module may further include: a case surrounding the first battery cell and the second battery cell from both sides and including an opening exposing side portions of the first battery cell and the second battery cell toward the first conductive member.

According to another aspect of the present disclosure, a battery module includes: a housing; a first battery cell and a second battery cell accommodated inside the housing; and a conductive member electrically connecting the first battery cell and the second battery cell and partially embedded in the housing to be fixed to the housing, wherein the conductive member includes a first portion embedded in the housing and a second portion extending outwardly of the housing from the first portion and exposed to an outer surface of the housing.

The conductive member may include: a bridge embedded in the housing; connection portions extending from both sides of the bridge and respectively connected to the first battery cell and the second battery cell; and a flange extending in a direction, intersecting a direction in which the connection portions extend.

The flange may extend in a direction away from each of the connection portions.

At least one of the connection portions may include at least one through-hole in a portion embedded in the housing, and an inside of the through-hole may be filled with a material constituting the housing.

The housing may include a vent hole connecting an internal side and an external side of the housing, and the conductive member may include a through-hole in a portion corresponding to the vent hole.

The through-hole may be provided to be larger than the vent hole.

The battery module may further include: a case surrounding the first battery cell and the second battery cell from both sides and including an opening exposing side portions of the first battery cell and the second battery cell toward the conductive member.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view of a battery pack according to an exemplary embodiment;
FIG. 2 is a perspective view of a battery module according to an exemplary embodiment;
FIG. 3 is an exploded perspective view of a battery module according to an exemplary embodiment;
FIG. 4 is an enlarged view of a side surface portion of a battery module according to a first exemplary embodiment;
FIG. 5 is a perspective view of a terminal assembly according to the first exemplary embodiment;
FIG. 6 is a cross-sectional view taken along line I-I' of FIG. 5;
FIG. 7 is a cross-sectional view taken along line II-II' of FIG. 5;
FIG. 8 is an enlarged view of a side surface portion of a battery module according to a second exemplary embodiment;
FIG.9 is a perspective view of a terminal assembly according to the second exemplary embodiment;
FIG. 10 is a cross-sectional view taken along line III-III' of FIG. 9; and
FIG. 11 is a cross-sectional view taken along line IV-IV' of FIG. 9.

### DETAILED DESCRIPTION

Hereinafter, an exemplary embodiment in the present disclosure will be described in detail with reference to the drawings. However, the technical idea of the present disclosure is not limited to the presented exemplary embodiment.

For example, those skilled in the art who understand the technical idea of the present disclosure will be able to propose other exemplary embodiments included within the scope of the present disclosure through addition, change, or deletion of components, but this is also considered to be within the scope of the technical idea.

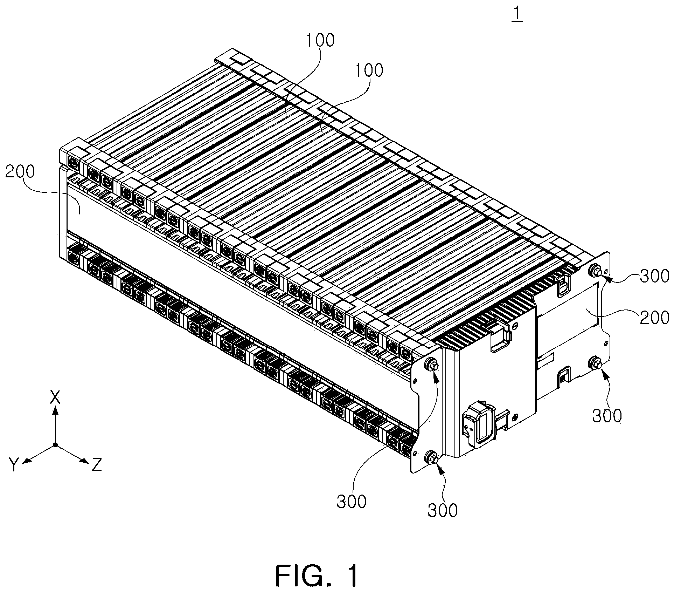

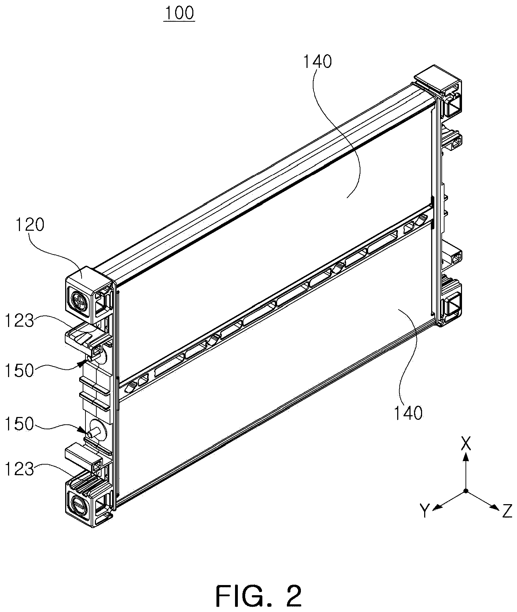

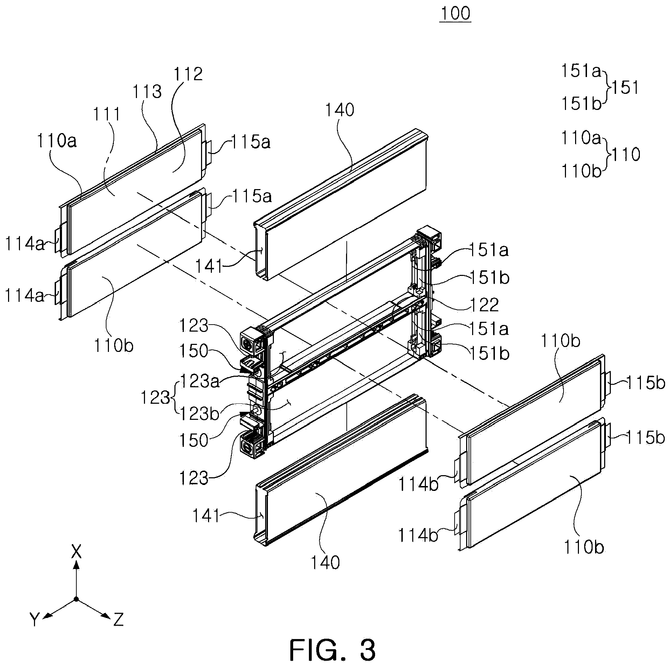

FIG. 1 is a perspective view of a battery pack 1 according to an exemplary embodiment. FIG. 2 is a perspective view of a battery module 100 according to an exemplary embodiment. FIG. 3 is an exploded perspective view of the battery module 100 according to an exemplary embodiment.

Referring to FIG. 1, in an exemplary embodiment, the battery pack 1 includes a plurality of battery modules 100. The battery modules 100 are stacked in one direction, and the battery modules 100 are disposed between two end plates 200 facing each other. A fastening member 300 penetrates through the two end plates 200 and the battery modules 100 between the end plates 200. The fastening member 300 may include a nut screwed to a portion protruding out of the end plate 200. The battery modules 100 disposed inside the two end plates 200 may be pressed in a stacking direction (i.e., a Z direction) by the fastening member 300.

Referring to FIGS. 2 and 3, in an exemplary embodiment, the battery module 100 includes a battery cell 110 and a housing 120 accommodating the battery cell 110.

In an exemplary embodiment, the battery cell 110 may include an upper surface 111, a lower surface 112, and a side portion 113 surrounding a space between the upper surface 111 and the lower surface 112. When the battery cell 110 is provided in the form of a pouch, the upper surface 111 and the lower surface 112 of the battery cell 110 may refer to surfaces facing a direction in which electrode plates are stacked.

In an exemplary embodiment, the battery cell 110 may be provided in the form of a plate extending in a length direction (e.g., a Y direction). The battery cell 110 may include a lead 114 extending in a length direction. The battery cell 110 may include two leads 114 extending in opposite directions (or in a direction away from each other). In an exemplary embodiment, a tab or lead 114 of the battery cell 110 may be drawn out from the side portion 113 of the battery cell 110 in the length direction. Referring to FIG. 3, the battery cell 110 may include leads 114 extending in a +Y direction and a -Y direction from the side portion 113 of the battery cell 110, respectively.

In an exemplary embodiment, the battery cell 110 may be provided in the form of a pouch. The pouch-shaped battery cell 110 may include negative plates and positive plates that are alternately stacked. A tab is drawn out from each electrode plate, and a plurality of tabs may be connected to one lead 114. For example, tabs drawn from positive plates may be connected to the positive lead 114, and tabs drawn from the negative plates may be connected to negative lead 114. Referring to FIG. 3, the battery cell 110 may include a negative tab (or lead 114) drawn out in a +Y direction and a positive tab (or lead 114) drawn out in a -Y direction. The electrode plates are wrapped by an exterior material and sealed from the outside of the battery cell 110.

The battery cell 110 is disposed in a space 121 surrounded by the housing 120. In an exemplary embodiment, the housing 120 may be provided in the form of a rectangular frame surrounding the side portion 113 of the battery cell 110. In an exemplary embodiment, an inner space of the housing 120 may be divided into two spaces 121a and 121b based on an intermediate partition wall 122, and a pair of battery cells 110a and 110b may be disposed in the divided spaces, respectively.

In an exemplary embodiment, the housing 120 may include a vent hole 123. The vent hole 123 is configured to allow gas or flame occurring in the battery cell 110 to escape.

In an exemplary embodiment, the vent hole 123 may be provided to be open toward the side portion 113 of the battery cell 110. For example, the vent hole 123 may be provided in the housing 120 to face the side portions 113 at both ends of the battery cell 110 in the length direction (i.e., the Y direction).

In an exemplary embodiment, the vent hole 123 may be blocked by a blocking member. The blocking member may be disposed on one side or an internal side of the vent hole 123. In an event situation such as a fire occurring in the battery cell 110, the blocking member may be broken or melted to be cut, and gas or flame may escape to the outside of the housing 120 through the vent hole 123. Although it is shown that there is no blocking member in the drawings of the present disclosure, this is for convenience of explanation and the battery modules 100 illustrated in the drawings of the present disclosure may include a blocking member provided in the vent hole 123.

In an exemplary embodiment, the battery module 100 may include a metal case 140 surrounding both sides of the battery cell 110. The side portion 113 of the battery cell 110 is surrounded by the housing 120, and both surfaces 111 and 112 of the battery cell 110 are surrounded by the metal case 140. Referring to FIG. 3, the metal case 140 is fitted into the housing 120 to surround the pair of battery cells 110a and 110b from both sides in the thickness direction (i.e., the Z direction).

In an exemplary embodiment, the metal case 140 may press the battery cells 110 in a thickness direction (or a stacking direction). In an exemplary embodiment, the metal case 140 may compress the battery cell 110 with a constant force in the thickness direction to improve the efficiency of the battery cell 110.

Referring to FIG. 3, the metal case 140 may include an opening 141 opened in the length direction (e.g., the Y direction) of the battery cell 110, and a portion of the side portion 113 of the battery cell 110 may be exposed through the opening 141 in the length direction. When a fire occurs in the battery cell 110, the metal case 140 may guide gas or flame occurring due to the fire in a direction (e.g., Y direction) toward the opening 141. The flame or gas induced by the metal case 140 in the length direction may escape to the outside of the battery module 100 through the vent hole 123 of the housing 120.

In an exemplary embodiment, the battery module 100 may include a terminal assembly 150 as a conducting unit electrically connecting the pair of battery cells 110a and 110b to the outside of the battery module 100.

In an exemplary embodiment, the terminal assembly 150 is fixed to the housing 120. In an exemplary embodiment, the terminal assembly 150 may be partially embedded in the housing 120 to be fixed to the housing 120. For example, the housing 120 may be provided in such a manner that an insulating material (e.g., synthetic resin such as plastic) is injected to surround at least a portion of the terminal assembly 150.

Meanwhile, in the present disclosure, that a member is embedded or positioned inside the housing 120 may mean that a material (e.g., plastic) constituting the housing 120 surrounds a periphery of the member. That is, when a member is embedded in the housing 120, the member is not visually recognized from the surface of the housing 120. For example, when the plate is embedded in the housing 120 formed of a plastic material, both sides of the plate are surrounded by the plastic and not exposed to a surface of the housing 120. Hereinafter, it will be described that the housing 120 is formed of a plastic material, but this is only for convenience of description. In an exemplary embodiment, a material of the housing 120 is not limited to plastic and may include any insulating material. For example, the housing 120 may be formed of PP GF30, PAGF30, or the like.

In an exemplary embodiment, the pair of battery cells 110a and 110b may be electrically connected to each other by the terminal assembly 150. In an exemplary embodiment, the terminal assembly 150 may electrically connect the positive leads 114a and 114b (or the negative leads 115a and 115b) of the pair of battery cells 110a and 110b to each other. For example, the terminal assembly 150 may include connection portions 151a and 115b extending to the inside of the housing 120 and respectively connected to the first battery cell 110a and the second battery cell 110b. Referring to FIG. 3, the connection portions 151a and 115b extend into the inner space 121 of the housing 120.

In an exemplary embodiment, one terminal assembly 150 may be disposed on the left (+Y direction) and right (-Y direction) of the pair of battery cells 110a and 110b, respectively. In the present disclosure, for convenience of description, a lead drawn out to the left is referred lead, b to as a positive lead, and a lead drawn to the right is referred to as a negative lead, but the exemplary embodiment of the present disclosure is not limited thereto. For example, the lead drawn out to the left may be a negative lead, and the lead drawn out to the right may be a positive lead.

Meanwhile, there is a risk that the terminal assembly 150 may be separated from the housing 120 in an event such as thermal runaway. For example, the terminal assembly 150 is embedded in and fixed to the housing 120, and if the terminal assembly 150 is heated by a flame or gas occurring inside the housing 120, a material surrounding the terminal assembly 150 may melt and the terminal assembly 150 may be separated from the housing 120. When the terminal assembly 150 is separated from the housing 120, a relatively large hole (or gap) connecting the inner space 121 (i.e., the space in which the battery cell 110 is located) and an outer space of the housing 120 may be formed. Air from the outside of the battery module 100 may flow into the battery cell 110 through this hole, which may further accelerate thermal runaway of the battery cell 110. Therefore, it is necessary to prevent the terminal assembly 150 from being separated from the housing 120 even in situations such as thermal runaway.

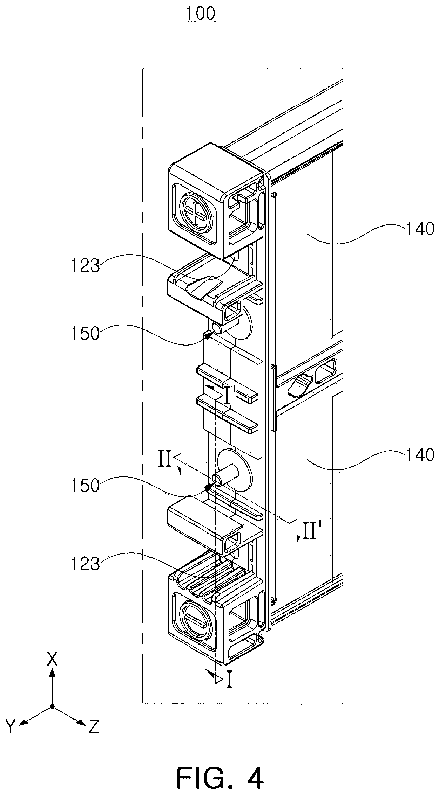

Hereinafter, a unit or structure preventing the terminal assembly 150 from being separated from the housing 120 will be described with reference to FIGS. 4 to 11.

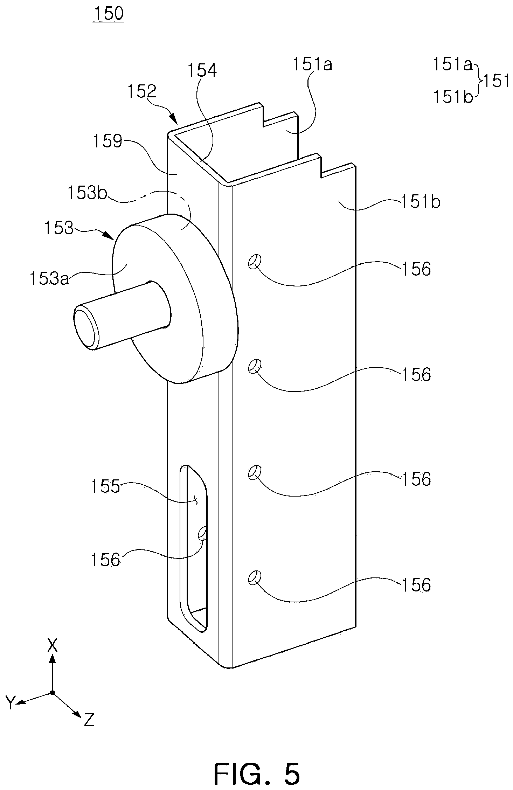

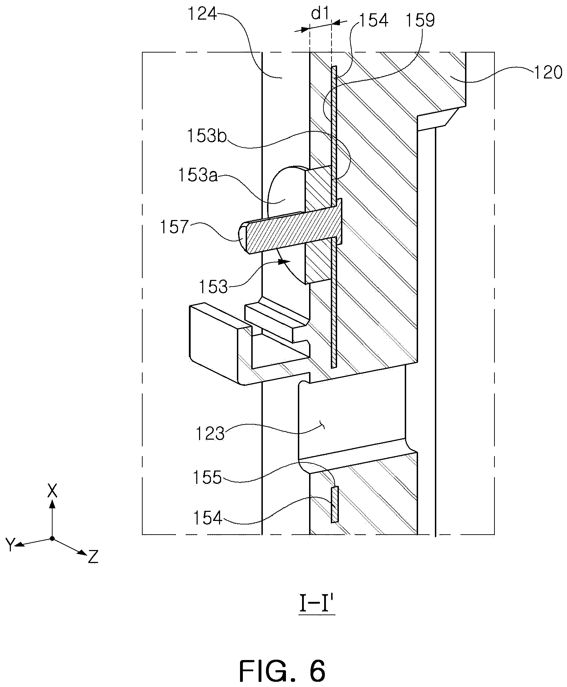

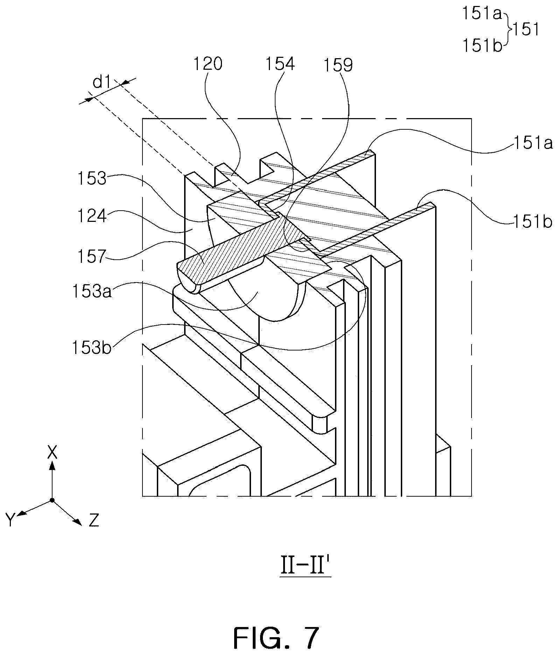

FIG. 4 is an enlarged view of a side portion of the battery module 100 according to a first exemplary embodiment. FIG. 5 is a perspective view of the terminal assembly 150 according to the first exemplary embodiment. FIG. 6 is a cross-sectional view taken along line I-I' of FIG. 4. FIG. 7 is a cross-sectional view taken along line II-II' of FIG. 4.

Referring to FIGS. 4 and 5, in an exemplary embodiment, the terminal assembly 150 may include a first conductive member 152 connected to the battery cell 110 and a second conductive member 153 electrically connected to the first conductive member 152. In this case, a portion of the first conductive member 152 may be embedded in the housing 120, and a portion of the second conductive member 153 may be exposed to the outside of the housing 120.

In an exemplary embodiment, the second conductive member 153 may be provided as a portion of the first conductive member 152 protruding to the outside of the housing 120. That is, the second conductive member 153 and the first conductive member 152 may be provided as one component.

In an exemplary embodiment, a portion of the second conductive member 153 may be in contact with the first conductive member 152, and a portion thereof may be exposed to the outside of the housing 120. For example, the second conductive member 153 may include a first surface 153a and a second surface 153b facing each other and spaced apart from each other, and the second surface 153b may be in contact with the first conductive member 152 and the first surface 153a may be exposed to the outside of the housing 120.

In an exemplary embodiment, the first conductive member 152 may be configured to electrically connect two battery cells 110a and 110b. In an exemplary embodiment, the first conductive member 152 may include connection portions 151a and 151b respectively connected to different battery cells 110a and 110b and a bridge 154 connecting the connection portions 151a and 151b to each other.

In an exemplary embodiment, the connection portion 151 may be provided to be bent and extending from both edges of the bridge 154. For example, referring to FIG. 5, the bridge 154 may be provided in the form of a plate including a surface 159 facing in the Y direction, and the first connection portion 151a extends in the -Y direction from an edge of the bridge 154 in a -Z direction and is connected to the first battery cell 110a, and the second connection portion 151b extends in the -Y direction from an edge of the bridge 154 in a +Z direction and is connected to the second battery cell 110b.

Referring to FIG. 3 together, the connection portions 151a and 151b may be connected to the tabs or leads 114a, 114b, 115a, and 115b drawn out from the battery cell 110. For example, the connection portions 151a and 151b may be coupled to the leads 114a, 114b, 115a, and 115b of the battery cell 110 by welding. Leads connected to the first connection portion 151a and the second connection portion 151b have the same polarity. For example, the positive lead 114a of the first battery cell 110a and the positive lead 114b of the second battery cell 110b may be connected to the first connection portion 151a and the second connection portion 151b, respectively. As another example, the negative lead 115a of the first battery cell 110a and the negative lead 115b of the second battery cell 110b may be connected to the first connection portion 151a and the second connection portion 151b, respectively.

Meanwhile, the structure of the first conductive member 152 illustrated in FIGS. 5 to 7 is only an example and it may be enough for the structure to electrically connect the leads (e.g., positive leads 114a and 114b and negative leads 115a and 115b) having the same polarity drawn out of the first battery cell 110a and the second battery cell 110b, respectively.

Referring to FIGS. 6 and 7, in an exemplary embodiment, the bridge 154 may be embedded in the housing 120. The bridge 154 is disposed to be spaced apart from the outer surface 124 of the housing 120 by a first distance d1 in the -Y direction. Accordingly, the bridge 154 is not exposed to the outside of the housing 120. In the present disclosure, when a member is not exposed to the outside of the housing 120, it means that the battery module 100 is not exposed externally.

As the bridge 154 is embedded in the housing 120, the terminal assembly 150 may be prevented from being separated from the housing 120. When a high-temperature, high-pressure gas occurs inside the battery module 100 due to thermal runaway, etc., a force pushing the terminal assembly 150 out of the housing 120 may act. Since the terminal assembly 150 is also heated together, a portion of the housing 120 in contact with the terminal assembly 150 may melt or soften, thereby increasing the risk of the terminal assembly 150 being separated from the housing 120. According to an exemplary embodiment, since the bridge 154 of the terminal assembly 150 is embedded in the housing 120, even if a force directed to the outside of the housing 120 acts on the terminal assembly 150, a portion of the housing 120 disposed on the bridge 154 may prevent or suppress the terminal assembly 150 from being separated from the housing 120. For example, since the bridge 154 has a surface, perpendicular to the Y axis, and a portion of the housing 120 covers the surface of the bridge 154, even if a force in the +Y direction acts on the terminal assembly 150, a portion of the housing 120 covering the surface of the bridge 154 provides resistance in the -Y direction to the bridge 154. Since a portion of the housing 120 covers the surface of the bridge 154 in the form of a plate, even if a portion of the housing 120 in contact with the bridge 154 melts, it may be difficult for the bridge 154 to penetrate through a portion of the housing 120 on the bridge 154 and be separated out of the housing 120.

The second surface 153b of the second conductive member 153 may be in contact with the bridge 154, and the second conductive member 153 may extend from the second surface 153b in the +Y direction by a length equal to or greater than the first distance d1. Accordingly, the first surface 153a of the second conductive member 153 may be exposed to the outside of the housing 120.

In an exemplary embodiment, a portion of the connection portion 151 may be embedded in the housing 120. In an exemplary embodiment, the connection portion 151 may include a portion extending from the bridge 154 and embedded in the housing 120. Referring to FIG. 7, the connection portion 151 may extend from the bridge 154 in an inward direction (i.e., the -Y direction) of the housing 120 and may be partially embedded in the housing 120 together with the bridge 154.

Referring to FIGS. 5 and 6, in an exemplary embodiment, the bridge 154 may extend to a portion corresponding to the vent hole 123. In this case, the bridge 154 may include a first through-hole 155 in a portion corresponding to the vent hole 123 not to block the vent hole 123. The bridge 154 may prevent the vent hole 123 from being excessively expanded in size. For example, when a flame or gas is discharged through the vent hole 123, a portion of the housing 120 defining the vent hole 123 may be melted by high temperature to increase the size of the vent hole 123. If the size of the vent hole 123 is excessively large, a large amount of air from the outside of the battery module 100 may be introduced into the housing 120 to further accelerate a combustion reaction of the battery cell 110. According to an exemplary embodiment, the bridge 154 may be configured to surround the vent hole 123, which may limit the size of the vent hole 123 to a size corresponding to the first through-hole 155 even in a thermal runaway situation. This is because the bridge 154 is formed of a metal material and has relatively greater resistance to heat than a material constituting the housing 120.

In an exemplary embodiment, the second through-hole 156 may be located in a portion of the connection portion 151 that is embedded in the housing 120. In the process of manufacturing the housing 120 by injecting plastic, the inside of the second through-hole 156 of the connection portion 151 is also filled with plastic. The plastic material filling the second through-hole 156 may provide resistance when the first conductive member 152 may move with respect to the housing 120. That is, the through-hole may contribute to preventing the terminal assembly 150 from being separated from the housing 120 in a thermal runaway situation. When the terminal assembly 150 inside the battery module 100 is about to be pushed out in the +Y direction, the plastic material disposed inside the second through-hole 156 may provide resistance in the -Y direction. That is, when the terminal assembly 150 is about to move in the +Y direction with respect to the housing 120, shear stress may be formed in the Y direction at both ends of the cylindrical plastic part disposed inside the second through-hole 156, and this shear stress may contribute to suppressing a movement of the terminal assembly 150 in the Y direction.

In an exemplary embodiment, the second through-hole 156 may be provided at a plurality of points of the connection portion 151. For example, referring to FIG. 5, the second through-hole 156 may be provided at four places of the portion of the connection portion 151 embedded in the housing 120. The position, size, or pattern of the second through-hole 156 illustrated in FIG. 5 is merely an example, and the second through-hole 156 may be provided in various sizes, in various numbers, and in various patterns in the portion of the connection portion 151 embedded in the housing 120.

In an exemplary embodiment, the terminal assembly 150 may include a rod 157 protruding outside the housing 120. The rod 157 may extend from the bridge 154 of the first conductive member 152 to the outside of the housing 120. The second conductive member 153 may be fitted into the rod 157 and may be in contact with the bridge 154. For example, the second conductive member 153 may include a hole through which the rod 157 may be fitted. The rod 157 may include a screw thread on an outer circumferential surface, and the second conductive member 153 may include a screw hole that may be screwed to the rod 157.

The second through-hole 156 is not an essential component of the terminal assembly 150 and may be omitted unlike the illustrated exemplary embodiment.

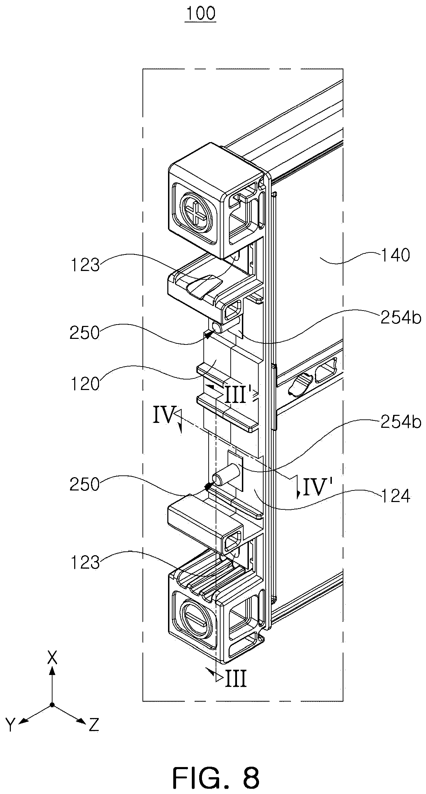

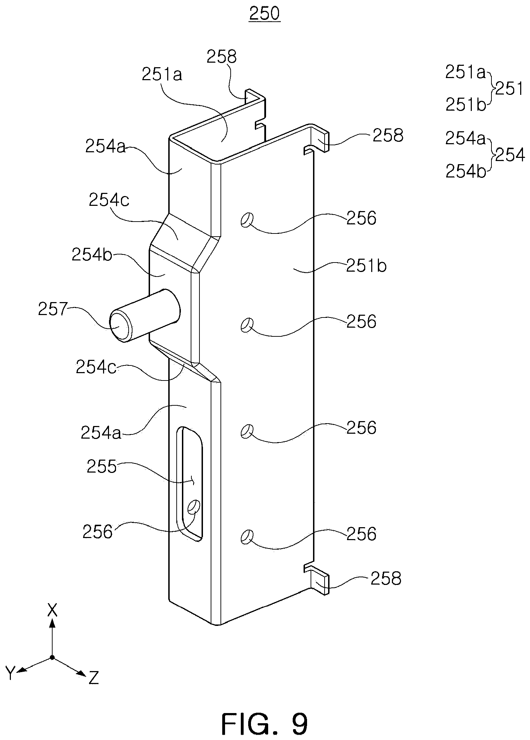

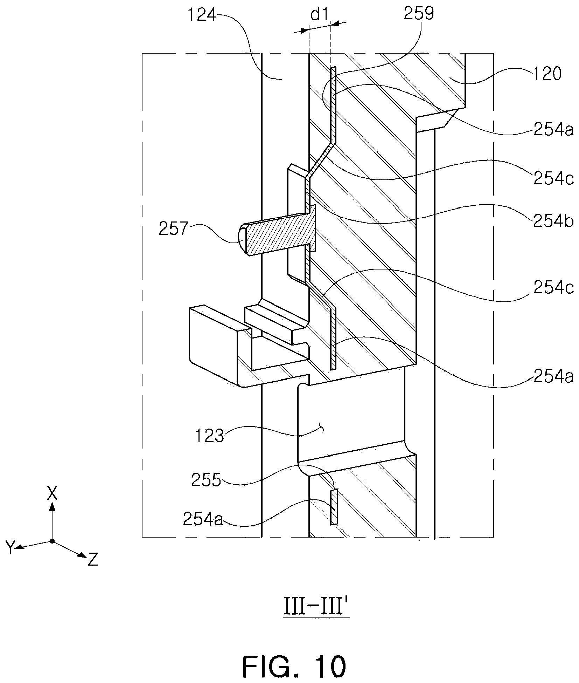

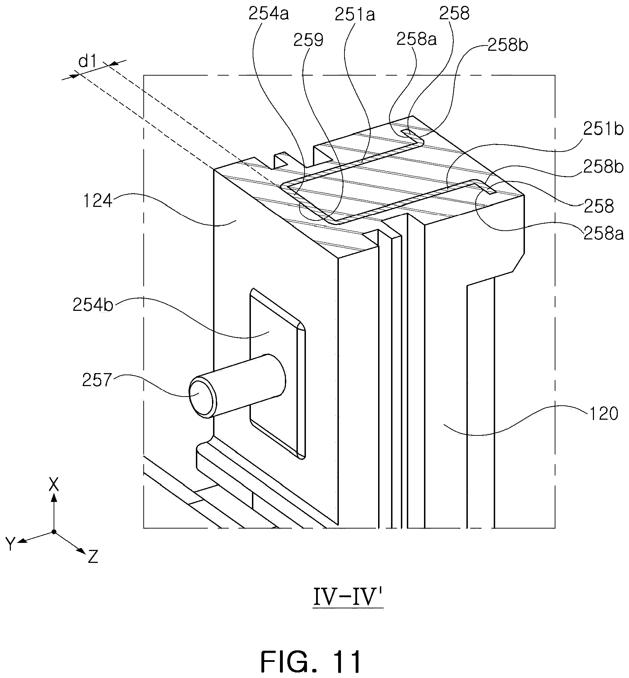

FIG. 8 is an enlarged view of a side surface portion of the battery module 100 according to a second exemplary embodiment. FIG. 9 is a perspective view of a terminal assembly 250 according to the second exemplary embodiment. FIG. 10 is a cross-sectional view taken along line III-III' of FIG. 9. FIG. 11 is a cross-sectional view taken along line IV-IV' of FIG. 8. The terminal assembly 250 illustrated in FIGS. 9 to 11 may replace the terminal assembly 150 illustrated in FIGS. 2 and 3.

In an exemplary embodiment, the conductive member 252 may be configured to electrically connect two battery cells 110a and 110b. In an exemplary embodiment, the conductive member 252 may include connection portions 251a and 251b respectively connected to different battery cells 110a and 110b and a bridge 254 connecting the connection portions 251a and 251b to each other.

In an exemplary embodiment, the connection portion 251 may be provided to be bent and extend from both edges of the bridge 254. For example, referring to FIG. 9, the bridge 254 is provided in the form of a plate having a surface 259 facing in the Y direction, and the first connection portion 251a extends in the -Y direction from an edge of the bridge 254 in a -Z direction and is connected to the first battery cell 110a, and the second connection portion 251b extends in the -Y direction from an edge of the bridge 254 in a +Z direction and is connected to the second battery cell 110b.

Referring to FIG. 3 together, the connection portions 251a and 251b may be connected to the tabs or leads 114a, 114b, 115a, and 115b drawn out from the battery cell 110. For example, the connection portions 251a and 251b may be coupled to the leads 114a, 114b, 115a, and 115b of the battery cell 110 by welding. Leads connected to the first connection portion 251a and the second connection portion 251b have the same polarity. For example, the positive lead 114a of the first battery cell 110a and the positive lead 114b of the second battery cell 110b may be connected to the first connection portion 251a and the second connection portion 251b, respectively. As another example, the negative lead 115a of the first battery cell 110a and the negative lead 115b of the second battery cell 110b may be connected to the first connection portion 251a and the second connection portion 251b, respectively.

Meanwhile, the structure of the conductive member 252 illustrated in FIGS. 9 to 11 is only an example and it may be enough for the structure to electrically connect the leads (e.g., positive leads 114a and 114b and negative leads 115a and 115b) having the same polarity drawn out of the first battery cell 110a and the second battery cell 110b, respectively.

Referring to FIGS. 10 and 11, in an exemplary embodiment, the bridge 254 may be partially embedded in the housing 120. In an exemplary embodiment, the bridge 254 may include a first portion 254a embedded in the housing 120 and not exposed to the outside and a second portion 254b exposed to the outside of the housing 120. Referring to FIG. 8, only the second portion 254b of the bridge 254 is exposed to the outside of the housing 120.

Referring to FIG. 10, the first portion 254a of the bridge 254 is spaced apart from the outer surface 124 of the housing 120 by a first distance in an inward direction (i.e., the -Y direction) of the housing 120. Accordingly, the first portion 254a of the bridge 254 is not exposed to the outside of the housing 120. In the present disclosure, when a member is not exposed to the outside of the housing 120, it means that the battery module 100 is not exposed externally.

As the first portion 254a is embedded in the housing 120, the terminal assembly 250 may be prevented from being separated from the housing 120. When a high-temperature, high-pressure gas occurs inside the battery module 100 due to thermal runaway, etc., a force pushing the terminal assembly 250 out of the housing 120 may act. Since the terminal assembly 250 is also heated together, a portion of the housing 120 in contact with the terminal assembly 250 may melt or soften, thereby increasing the risk of the terminal assembly 250 being separated from the housing 120. According to an exemplary embodiment, since the first portion 254a of the terminal assembly 250 is embedded in the housing 120, even if a force directed to the outside of the housing 120 acts on the terminal assembly 250, a portion of the housing 120 disposed on the first portion 254a may prevent or suppress the terminal assembly 250 from being separated from the housing 120. For example, since the first portion 254a has a surface, perpendicular to the Y axis, and a portion of the housing 120 covers the surface of the first portion 254a, even if a force in the +Y direction acts on the terminal assembly 250, a portion of the housing 120 covering the surface of the first portion 254a provides resistance in the -Y direction to the first portion 254a. Since a portion of the housing 120 covers the surface of the first portion 254a in the form of a plate, even if a portion of the housing 120 in contact with the first portion 254a melts, it may be difficult for the first portion 254a to penetrate through a portion of the housing 120 on the first portion 254a and be separated out of the housing 120.

The second portion 254b of the bridge 254 protrudes (or extends) from the first portion 254a in an outward direction (i.e., the +Y direction) of the housing 120. Accordingly, a step portion 254c exists between the first portion 254a and the second portion 254b. The step portion 254c may be provided in an inclined shape from the first portion 254a to the second portion 254b. A length of the second portion 254b protruding in the +Y direction from the first portion 254a may be equal to or greater than a first distance d1 at which the first portion 254a is spaced apart from the outer surface 124 of the housing 120. Accordingly, the second portion 254b of the bridge 254 may be exposed to the outside of the housing 120.

In an exemplary embodiment, a portion of the connection portion 251 may be embedded in the housing 120. In an exemplary embodiment, the connection portion 251 may include a portion that extends from the bridge 254 and is embedded in the housing 120. Referring to FIG. 11, the connection portion 251 may extend from the bridge 254 to the inside of the housing 120 (i.e., the -Y direction), and may be partially embedded in the housing 120 together with the bridge 254.

In an exemplary embodiment, the conductive member 252 may include a flange 258. Referring to FIGS. 9 and 11, the connection portion 251 of the conductive member 252 may extend in a first direction (e.g., the Y direction), and the flange 258 may extend in a direction (e.g., Z-direction or X-direction), crossing the first direction, from a portion of the connection portion 251. In an exemplary embodiment, the flange 258 may bent and extend from an end portion of the connection portion 251. In the illustrated exemplary embodiment, the flange 258 may be located at the end of the connection portion 251, but this is only an example, and in another exemplary embodiment, the flange 258 may protrude from a middle portion of the connection portion 251.

Referring to FIG. 9, in an exemplary embodiment, surfaces 258a and 258b of the flange 258 may coincide with a direction in which the connection portion 251 extends (i.e., the Y direction). In an exemplary embodiment, the flange 258 may extend in a direction (i.e., the Z direction) to which the connection portion 251 is directed.

In an exemplary embodiment, the flange 258 is embedded within the housing 120. The flange 258 extends in a direction crossing a force applied to the terminal assembly 250 in a thermal runaway situation, and thus the flange 258 may contribute to preventing the conductive member 252 from being separated from the housing 120. For example, in a thermal runaway situation, the terminal assembly 250 may be pushed in the +Y direction and separated from the housing 120, and here, the flange 258 extending in a direction crossing the Y direction may prevent such a phenomenon.

In an exemplary embodiment, the flange 258 may be provided to both the first connection portion 251a and the second connection portion 251b. The flange 258 of the first connection portion 251a and the flange 258 of the second connection portion 251b may extend in opposite directions. Referring to FIG. 9, in an exemplary embodiment, the flange 258 may be provided at an upper end portion and a lower end portion of the connection portion 251.

Meanwhile, although not illustrated in FIGS. 5 to 7, the first conductive member 152 may also include a flange having the same or similar shape to the flange 258 described above with reference to FIGS. 9 to 11. For example, the first conductive member 152 may include at least one flange protruding in a direction (i.e., Z direction) to which extension portions 151 are directed in a portion of the extension portions 151 embedded in the housing 120.

Referring to FIGS. 9 and 11, in an exemplary embodiment, the bridge 254 may extend to a portion corresponding to the vent hole 123. In this case, the bridge 254 may include a first through-hole 255 in a portion corresponding to the vent hole 123 not to block the vent hole 123. In another exemplary embodiment, the bridge 254 may include a first through-hole 255, and the vent hole 123 may be provided to pass through the first through-hole 255.

The first through-hole 255 of the bridge 254 may prevent the vent hole 123 from being excessively expanded in size. For example, when a flame or gas is discharged through the vent hole 123, a portion of the housing 120 defining the vent hole 123 may be melted by high temperature to increase the size of the vent hole 123. If the size of the vent hole 123 is excessively large, a large amount of air from the outside of the battery module 100 may be introduced into the housing 120 to further accelerate a combustion reaction of the battery cell 110. According to an exemplary embodiment, the first through-hole 255 of the bridge 254 may be configured to surround the vent hole 123, which may limit the size of the vent hole 123 to a size corresponding to the first through-hole 255 even in a thermal runaway situation. This is because the bridge 254 is formed of a metal material and has relatively greater resistance to heat than a material constituting the housing 120.

In an exemplary embodiment, the second through-hole 256 may be located in a portion of the connection portion 251 that is embedded in the housing 120. In the process of manufacturing the housing 120 by injecting plastic, the inside of the second through-hole 256 of the connection portion 251 is also filled with plastic. The plastic material filling the second through-hole 256 may provide resistance when the conductive member 252 may move with respect to the housing 120. That is, the second through-hole 256 may contribute to preventing the terminal assembly 250 from being separated from the housing 120 in a thermal runaway situation. When the terminal assembly 250 inside the battery module 100 is about to be pushed out in the +Y direction, the plastic material disposed inside the second through-hole 156 may provide resistance in the -Y direction. That is, when the terminal assembly 250 is about to move in the +Y direction with respect to the housing 120, shear stress may be formed in the Y direction at both ends of the cylindrical plastic part disposed inside the second through-hole 156, and this shear stress may contribute to suppressing a movement of the terminal assembly 250 in the Y direction.

In an exemplary embodiment, the second through-hole 256 may be provided at a plurality of points of the connection portion 251. For example, referring to FIG. 9, the second through-holes 256 may be provided at four places in a portion of the connection portion 251 embedded in the housing 120. The position, size, or pattern of the second through-hole 256 illustrated in FIG. 9 is only an example, and the second through-hole 256 may be provided in various sizes, in various numbers, and in various patterns in the portion of the connection portion 151 embedded in the housing 120.

The flange 258 may not be an essential component of the terminal assembly 250 and may be omitted unlike the illustrated exemplary embodiment. The second through-hole 256 may not be an essential component of the terminal assembly 250 and may be omitted unlike the illustrated exemplary embodiment.

In an exemplary embodiment, the terminal assembly 250 may include a rod 257 protruding outside the housing 120. The rod 257 may extend out of the housing 120 from the bridge 254 of the conductive member 252.

As set forth above, according to an exemplary embodiment in the present disclosure, a unit for stably maintaining a sealed structure of the battery module even in a thermal runaway situation is provided. The thermal runaway of the battery module may be suppressed or minimized, which may prevent fire transfer to a neighboring battery module.

While example exemplary embodiments have been shown and described above, it will be apparent to those skilled in the art that modifications and variations could be made without departing from the scope of the present disclosure as defined by the appended claims.

## Claims

1. A battery module (100) comprising:
a housing (120);
a first battery cell (110a) and a second battery cell (110b) accommodated inside the housing; and
a terminal assembly (150, 250)electrically connecting the first battery cell (110a) and the second battery cell (110b) and partially embedded in the housing (120) to be fixed to the housing, and
wherein the terminal assembly (150, 250) includes a first conductive member (152, 252) including a bridge (154, 254) embedded in the housing (120) and connection portions (151a, 151b, 251a, 251b) extending from both sides of the bridge (154, 254) and respectively connected to the first battery cell (110a) and the second battery cell (110b).

2. The battery module of claim 1, wherein the first conductive member (152, 252) includes a flange (258) extending in a direction, intersecting a direction in which the connection portions (151a, 151b, 251a, 251b) extend.

3. The battery module of claim 2, wherein the flange (258) extends in a direction away from each of the connection portions (151a, 151b, 251a, 251b).

4. The battery module of claim 1, wherein the connection portions (151a, 151b, 251a, 251b) include at least one through-hole (156, 256) in a portion embedded in the housing (120), and an inside of the through-hole (156, 256) is filled with a material constituting the housing (120).

5. The battery module of claim 1, wherein the housing (120) includes a vent hole (123) connecting an internal side and an external side of the housing (120), and the first conductive member (152, 252) includes a through-hole (155, 255) in a portion corresponding to the vent hole (123).

6. The battery module of claim 5, wherein the through-hole (155, 255) is provided to be larger than the vent hole (123) .

7. The battery module of claim 1, further comprising a second conductive member (153) electrically connected to the first conductive member (152, 252) and partially exposed to the external side of the housing (120).

8. The battery module of claim 7, further comprising a rod (157) extending from the first conductive member (152, 252) to the external side of the housing (120),
wherein the second conductive member (153) are fitted into the rod (157).

9. The battery module of claim 1, further comprising a case (140) surrounding the first battery cell (110a) and the second battery cell (110b) from both sides and including an opening exposing side portions of the first battery cell and the second battery cell toward the first conductive member (152, 252).

## Patentansprüche

1. Batteriemodul (100), das umfasst:
ein Gehäuse (120);
eine erste Batteriezelle (110a) und eine zweite Batteriezelle (110b), die im Inneren des Gehäuses untergebracht sind; und
eine Anschlussanordnung (150, 250), die die erste Batteriezelle (110a) und die zweite Batteriezelle (110b) elektrisch verbindet und teilweise in das Gehäuse (120) eingebettet ist, um an das Gehäuse befestigt zu sein, und
wobei die Anschlussbaugruppe (150, 250) ein erstes leitendes Element (152, 252) enthält, das eine in das Gehäuse (120) eingebettete Brücke (154, 254) und Verbindungsabschnitte (151a, 151b, 251a, 251b) enthält, die sich von beiden Seiten der Brücke (154, 254) erstrecken und jeweils mit der ersten Batteriezelle (110a) und der zweiten Batteriezelle (110b) verbunden sind.

2. Batteriemodul nach Anspruch 1, wobei das erste leitende Element (152, 252) einen Flansch (258) enthält, der sich in einer Richtung erstreckt, die eine Richtung schneidet, in der sich die Verbindungsabschnitte (151a, 151b, 251a, 251b) erstrecken.

3. Batteriemodul nach Anspruch 2, wobei sich der Flansch (258) in eine Richtung weg von jedem der Verbindungsabschnitte (151a, 151b, 251a, 251b) erstreckt.

4. Batteriemodul nach Anspruch 1, wobei die Verbindungsabschnitte (151a, 151b, 251a, 251b) mindestens ein Durchgangsloch (156, 256) in einem in das Gehäuse (120) eingebetteten Abschnitt aufweisen, und eine Innenseite des Durchgangslochs (156, 256) mit einem Material gefüllt ist, das das Gehäuse (120) bildet.

5. Batteriemodul nach Anspruch 1, wobei das Gehäuse (120) ein Entlüftungsloch (123) enthält, das eine innere Seite und eine äußere Seite des Gehäuses (120) verbindet, und das erste leitende Element (152, 252) ein Durchgangsloch (155, 255) in einem dem Entlüftungsloch (123) entsprechenden Abschnitt enthält.

6. Batteriemodul nach Anspruch 5, wobei das Durchgangsloch (155, 255) so vorgesehen ist, dass es größer als das Entlüftungsloch (123) ist.

7. Batteriemodul nach Anspruch 1, des Weiteren umfassend ein zweites leitendes Element (153), das elektrisch mit dem ersten leitenden Element (152, 252) verbunden ist und teilweise an der äußeren Seite des Gehäuses (120) freiliegt.

8. Batteriemodul nach Anspruch 7, des Weiteren umfassend einen Stab (157), der sich von dem ersten leitenden Element (152, 252) zu der äußeren Seite des Gehäuses (120) erstreckt,
wobei das zweite leitende Element (153) in den Stab (157) eingepasst ist.

9. Batteriemodul nach Anspruch 1, des Weiteren umfassend ein Gehäuse (140), das die erste Batteriezelle (110a) und die zweite Batteriezelle (110b) von beiden Seiten umgibt und eine Öffnung enthält, die Seitenabschnitte der ersten Batteriezelle und der zweiten Batteriezelle in Richtung des ersten leitenden Elements (152, 252) freilegt.

## Revendications

1. Module de batterie (100), comprenant :
un boîtier (120) ;
un premier élément de batterie (110a) et un deuxième élément de batterie (110b) logés à l'intérieur du boîtier ; et
un ensemble de bornes (150, 250) connectant électriquement le premier élément de batterie (110a) et le deuxième élément de batterie (110b) et partiellement encastré dans le boîtier (120) pour être fixé au boîtier, et
dans lequel l'ensemble de bornes (150, 250) comprend un premier élément conducteur (152, 252) incluant un pont (154, 254) encastré dans le boîtier (120) et des parties de connexion (151a, 151b, 251a, 251b) s'étendant des deux côtés du pont (154, 254) et respectivement connectées à la première cellule de batterie (110a) et à la deuxième cellule de batterie (110b).

2. Module de batterie de la revendication 1, dans lequel le premier élément conducteur (152, 252) inclut une bride (258) s'étendant dans une direction qui croise une direction dans laquelle les parties de connexion (151a, 151b, 251a, 251b) s'étendent.

3. Module de batterie de la revendication 2, dans lequel la bride (258) s'étend dans une direction opposée à chacune des parties de connexion (151a, 151b, 251a, 251b).

4. Module de batterie de la revendication 1, dans lequel les parties de connexion (151a, 151b, 251a, 251b) incluent au moins un trou traversant (156, 256) dans une partie encastrée dans le boîtier (120), et un intérieur du trou traversant (156, 256) est rempli d'un matériau constituant le boîtier (120).

5. Module de batterie de la revendication 1, dans lequel le boîtier (120) inclut un trou d'aération (123) connectant un côté interne et un côté externe du boîtier (120), et le premier élément conducteur (152, 252) inclut un trou traversant (155, 255) dans une partie correspondant au trou d'aération (123).

6. Module de batterie de la revendication 5, dans lequel le trou traversant (155, 255) est prévu pour être plus grand que le trou d'aération (123).

7. Module de batterie de la revendication 1, comprenant en outre un deuxième élément conducteur (153) connecté électriquement au premier élément conducteur (152, 252) et partiellement exposé à la face externe du boîtier (120).

8. Module de batterie de la revendication 7, comprenant en outre une tige (157) s'étendant du premier élément conducteur (152, 252) au côté extérieur du boîtier (120), dans lequel le deuxième élément conducteur (153) est inséré dans la tige (157).

9. Module de batterie de la revendication 1, comprenant en outre un boîtier (140) entourant la première cellule de batterie (110a) et la deuxième cellule de batterie (110b) des deux côtés et incluant une ouverture exposant les parties latérales de la première cellule de batterie et de la deuxième cellule de batterie vers le premier élément conducteur (152, 252).
